# FASCICULE DE BREVET EUROPEEN

(11) **EP 2 669 013 B1**
(45) Date de publication et mention de la délivrance du brevet: **14.11.2018**
(21) Numéro de dépôt: 13305721.6
(22) Date de dépôt: 31.05.2013
(51) Int. Cl.: B02C 18/22

(54) **PERFECTIONNEMENT AUX BROYEURS DE VÉGÉTAUX**
PERFEKTIONIERUNG VON PFLANZENHÄCKSLERN
IMPROVEMENT TO PLANT MILLS

(30) Priorité: 31.05.2012 FR 1255051
(43) Date de publication de la demande: 04.12.2013
(73) Titulaire: Rabaud, 85110 Sainte-Cecile (FR)
(72) Inventeur: Rabaud, Claude, 85110 SAINTE-CECILE (FR); Rabaud, Dominique, 85600 SAINT-GEORGES DE MONTAIGU (FR); Forcier, Guillaume, 85110 CHANTONNAY (FR)
(74) Mandataire: Jacobacci Coralis Harle

(56) Documents cités:
- US-A1- 2005 230 509
- US-A1- 2010 001 107
- US-A1- 2010 126 628
- US-B2- 7 546 964

## Description

La présente invention concerne les dispositifs broyeurs, notamment, mais non exclusivement, pour des végétaux tels que des branchages ou même certains troncs d'arbres de petit ou moyen diamètre.

L'entretien des bords de voies routières, talus, jardins ou parcs, en particulier, génère de grandes quantités de déchets végétaux tels que des branches ou des troncs d'arbres, qu'il est habituel de traiter par des broyeurs pour en réduire le volume.

Les documents US-5 413 286, EP-1 066 883, EP-2 363 017, ou encore US-2010/0126628, décrivent des broyeurs de ce type, comprenant une chambre de broyage équipée d'un rotor d'axe horizontal en position de travail, sur lequel sont montés des outils de coupe et/ou de défibrage.
La chambre de broyage comporte une ouverture d'entrée prolongée par une trémie de chargement en végétaux, et une ouverture de sortie, prolongée par une goulotte d'évacuation des copeaux de matériaux tranchés.

Très généralement, la trémie de chargement comporte un rouleau motorisé entraîné en rotation autour d'un axe parallèle à l'axe du rotor de broyage, dont la surface périphérique comporte des dents ou des palettes pour entraîner les végétaux dans la chambre de broyage.

Ce rouleau motorisé d'entraînement est placé juste devant l'ouverture d'entrée de la chambre de broyage, avec son plan médian vertical centré sur l'axe de cette ouverture d'entrée.
Il est positionné de sorte à venir appliquer une pression par-dessus les végétaux qui glissent sur le fond de la trémie de chargement. Son axe est généralement monté mobile au sein de lumières oblongues ménagées dans les parois latérales de la trémie, en association avec des moyens de rappel élastiques, pour assurer la pression verticale recherchée et pour absorber les variations d'épaisseur des végétaux à traiter.

De manière classique, l'extrémité aval de la trémie de chargement comporte deux parois latérales verticales qui s'évasent vers l'amont à partir des bordures latérales de l'ouverture d'entrée de la chambre de broyage, et entre lesquelles est positionné le rouleau motorisé d'entraînement.

Dans certains cas, la largeur de ce rouleau d'entraînement est inférieure à la largeur de l'ouverture d'entrée de la chambre de broyage, de manière à pouvoir pénétrer légèrement dans cette dernière.

Cependant, la structure des rouleaux motorisés connus jusqu'à présent n'assure pas un entraînement optimal des végétaux dans la chambre de broyage. En particulier, les branchages munis de larges fourches sont susceptibles d'entraîner des bourrages ou des à-coups d'alimentation.

La présente invention propose un broyeur dont la trémie de chargement est équipée d'une structure originale de rouleau motorisé d'entraînement, permettant d'améliorer et de régulariser l'introduction de la matière végétale dans la chambre de broyage.

Le broyeur en question comprend donc une chambre de broyage équipée d'un rotor de broyage entraîné en rotation autour d'un axe A, laquelle chambre de broyage comporte - une ouverture d'entrée de largeur L, qui est prolongée vers l'amont par une trémie pour le chargement en végétaux à broyer, et - une ouverture de sortie qui est prolongée vers l'aval par une goulotte pour l'évacuation des végétaux broyés, laquelle trémie de chargement comporte une extrémité amont et une extrémité aval qui est équipée d'un rouleau motorisé entraîné en rotation autour d'un axe B parallèle ou sensiblement parallèle à l'axe de rotation A dudit rotor de broyage, lequel rouleau motorisé est placé en regard de l'entrée de ladite chambre de broyage, avec son plan médian M centré ou sensiblement centré sur l'axe C de ladite ouverture d'entrée, et lequel rouleau motorisé comporte une surface périphérique adaptée pour entraîner les végétaux à broyer vers ladite ouverture d'entrée de la chambre de broyage;
et ce broyeur est caractérisé par le fait que ledit rouleau motorisé d'entraînement a une largeur D supérieure à la largeur L de ladite ouverture d'entrée de la chambre de broyage, et comporte des extrémités latérales dont la surface périphérique est munie de moyens assurant, ou tout au moins facilitant, le recentrage des végétaux vers l'axe C de ladite ouverture d'entrée.

Dans le cadre de la présente description, les termes « amont » et « aval » tiennent compte du sens de déplacement des produits dans le broyeur, c'est-à-dire de la trémie de chargement vers la goulotte d'évacuation.

Selon une caractéristique particulièrement intéressante, lesdits moyens de recentrage du rouleau motorisé d'entraînement consistent en au moins une spire hélicoïdale en saillie sur la surface périphérique de chaque extrémité dudit rouleau, lesdites spires d'extrémités ayant des pas convergeant vers le plan médian M dudit rouleau.

De préférence, lesdits moyens de recentrage consistent, au niveau de chaque extrémité du rouleau, en deux spires décalées entre elles de 180°.

Les spires de recentrage en question sont également avantageusement décalées entre elles de part et d'autre du plan médian M du rouleau, de manière à obtenir un recentrage des végétaux en guingois, c'est-à-dire de manière alternée d'un côté et de l'autre.

Selon encore une autre particularité, les moyens de recentrage sont associés à des palettes d'entraînement régulièrement ou sensiblement régulièrement espacées sur la surface périphérique des extrémités latérales du rouleau et orientées parallèlement ou sensiblement parallèlement à l'axe B dudit rouleau.

Toujours selon une autre particularité, le rouleau d'entraînement comporte des barrettes d'entraînement aménagées dans la partie centrale de sa surface périphérique, disposées entre les moyens de recentrage précités.
Ces barrettes d'entraînement sont de préférence chacune en forme générale de Vé, constituées de deux pans raccordés par une pointe qui est centrée sur le plan médian M du rouleau, et qui est orientée vers l'aval par rapport au sens de rotation dudit rouleau ; d'autre part, la bordure externe de ces barrettes d'entraînement est avantageusement munie de dents, et sur chaque pan des barrettes en Vé, ces dents sont avantageusement inclinées vers le plan médian M du rouleau d'entraînement.

Les extrémités des barrettes d'entraînement s'étendent de préférence jusqu'à la spire hélicoïdale en regard des moyens de recentrage latéraux.

Selon encore une autre caractéristique, la trémie de chargement comporte des parois de côtés munies de portion aval parallèles ou sensiblement parallèles entre elles, entre lesquelles est positionné le rouleau motorisé d'entraînement.

Les extrémités aval de ces deux portions aval parallèles des parois de côtés de la trémie se prolongent avantageusement à l'équerre ou sensiblement à l'équerre par une paroi frontale dans laquelle est ménagée l'ouverture d'entrée de la chambre de broyage.

D'autre part, les extrémités amont de ces deux portions aval parallèles des parois de côtés de la trémie se prolongent par des portions latérales qui s'évasent en direction de l'extrémité amont de la trémie ; et les extrémités amont des parois évasées se prolongent par des portions de côté parallèles qui s'étendent jusqu'à l'extrémité amont de la trémie de chargement.

L'invention sera encore illustrée, sans être aucunement limitée, par la description suivante d'une forme de réalisation particulière, donnée uniquement à titre d'exemple et représentée sur les dessins annexés dans lesquels :
- la figure 1 est une vue de côté d'un broyeur conforme à la présente invention ;
- la figure 2 est une vue en coupe selon le plan de coupe 2-2 de la figure 1 ;
- la figure 3 est une vue de dessous du broyeur illustré sur les figures 1 et 2 ;
- la figure 4 est une vue en coupe du même broyeur, selon le plan de coupe 4-4 de la figure 3 ;
- la figure 5 est une vue en coupe similaire à la figure 4, illustrant le passage d'une branche sous le rouleau motorisé d'entraînement de la trémie de chargement ;
- la figure 6 est une vue partielle illustrant la structure du rouleau d'entraînement et son positionnement dans la trémie de chargement ;
- la figure 7 est une vue en perspective du rouleau d'entraînement, illustré isolé ;
- la figure 8 est une vue de face du rouleau d'entraînement montrant son positionnement par rapport à l'ouverture d'entrée de la chambre de broyage ;
- la figure 9 est une vue en coupe du rouleau d'entraînement, au niveau de son plan médian vertical.

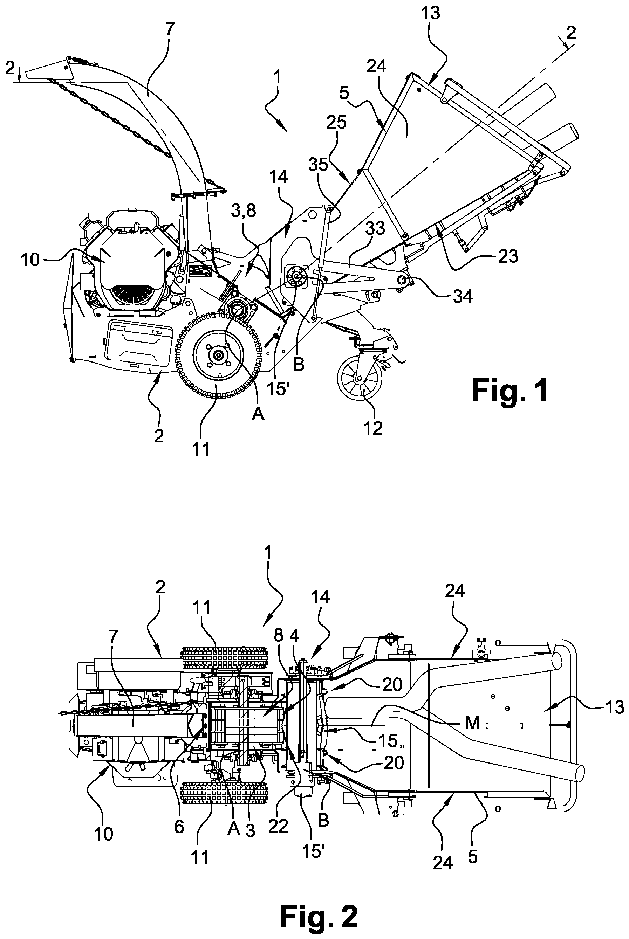

Le broyeur 1 illustré sur les figures 1 à 5 comprend un châssis roulant 2 qui porte une chambre de broyage 3 munie - d'une ouverture d'entrée 4 prolongée vers l'amont par une trémie 5 pour le chargement en végétaux à broyer, et - d'une ouverture de sortie 6, prolongée vers l'aval par une goulotte 7 pour l'évacuation des végétaux broyés.

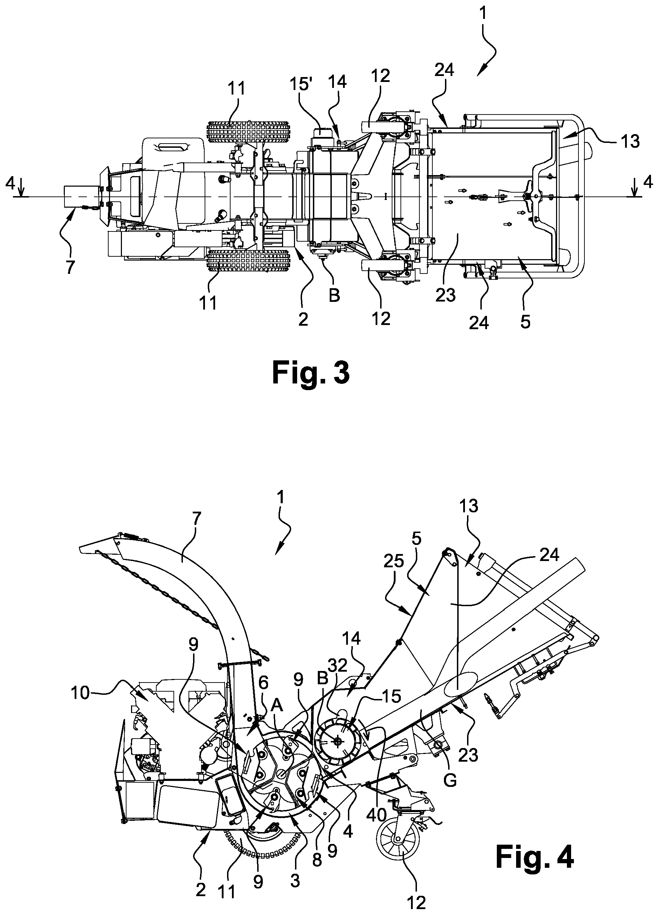

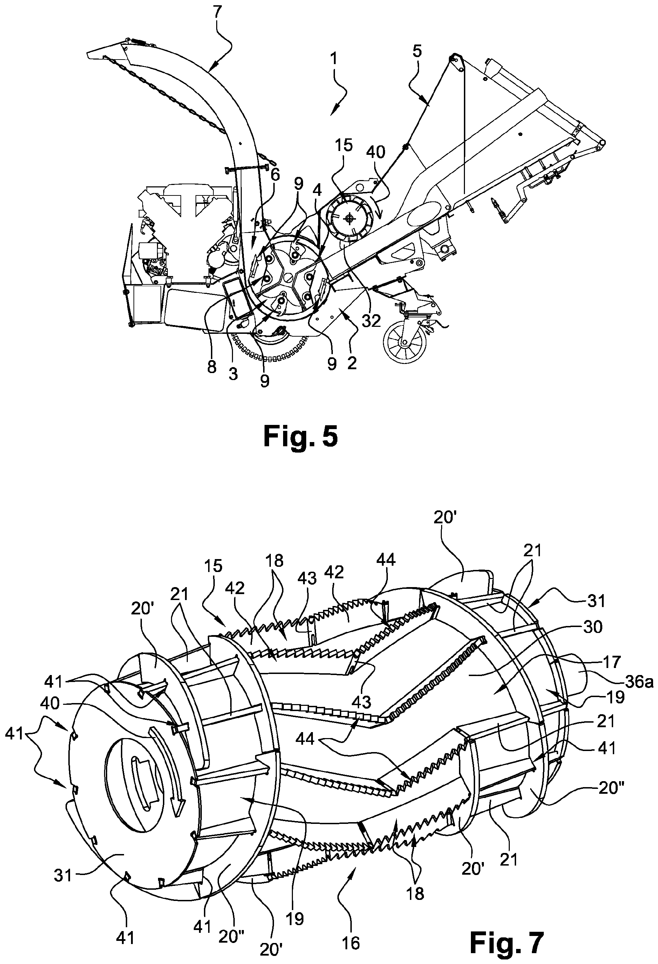

La chambre de broyage 3 est équipée d'un rotor 8 dont la périphérie porte des outils 9 adaptés au type de matériaux à traiter, ici, par exemple, des couteaux et des fléaux disposés en alternance (voir figures 4 et 5 en particulier).

Ce rotor 8 est entraîné en rotation par une motorisation adaptée, consistant ici en un moteur thermique 10 qui est porté par le châssis 2 et qui est associé à des moyens d'embrayage/débrayage manuels ; l'entraînement correspondant est réalisé par tout moyen de transmission adapté, genre courroie(s), chaîne(s) ou pignon(s) par exemple.
A titre de variante, le broyeur peut être porté par l'attelage trois points d'un véhicule tracteur agricole, et entraîné par la prise de force de ce véhicule tracteur par l'intermédiaire d'une transmission adaptée.
Le rotor 8 est entraîné en rotation autour d'un axe A qui s'étend horizontalement en position de travail normal.

Le châssis 2 comporte ici deux roues avant 11 et deux roues arrière 12.

La trémie de chargement 5 est formée d'un assemblage de tôles ; elle comporte une extrémité amont 13 et une extrémité aval 14 orientée du côté de la chambre de broyage 3.

Du côté de son extrémité aval 14, la trémie de chargement 5 intègre un rouleau motorisé 15, disposé juste en regard de l'ouverture d'entrée 4 de la chambre de broyage 3, agencé pour entraîner les végétaux à broyer dans la chambre de broyage 3, au travers de ladite ouverture d'entrée 4.

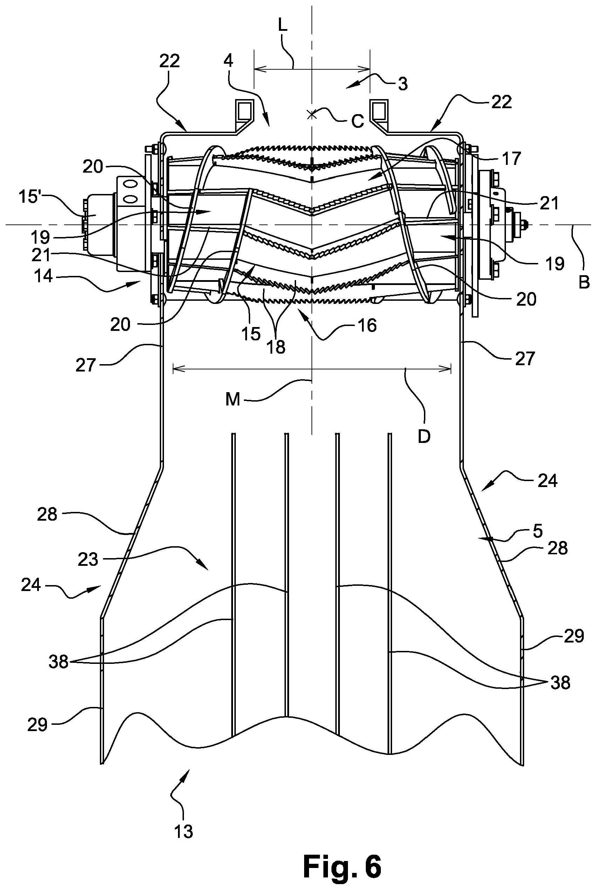

Ce rouleau 15, dont la structure est détaillée sur les figures 6 à 9, est entraîné en rotation autour d'un axe B parallèle ou sensiblement parallèle à l'axe A du rotor de broyage 8 ; cet entraînement est réalisé au moyen d'un moteur hydraulique 15' alimenté en huile par une pompe hydraulique entraînée en rotation par le moteur thermique 10, ceci par l'intermédiaire de moyens de transmission adaptés genre courroies par exemple, ou en direct.

Comme on peut le voir en particulier sur la figure 6, le plan médian vertical M du rouleau 15, perpendiculaire à son axe B, est centré (ou sensiblement centré) sur l'axe C de l'ouverture d'entrée 4 de la chambre de broyage 3.

En outre :
- la largeur D de ce rouleau 15 est nettement supérieure à la largeur L de cette ouverture d'entrée 4 (de préférence la largeur D est supérieure à 1,5 fois la largeur L ; ici D correspond environ à deux fois L),
- au niveau de sa partie centrale 16, la surface périphérique 17 de ce rouleau 15 est munie de moyens 18 pour assurer l'entraînement des végétaux (en relation avec la rotation du rouleau), de manière à les diriger vers ladite ouverture d'entrée 4, et
- au niveau de ses extrémités latérales 19, la surface périphérique 17 de ce rouleau 15 est munie de moyens 20 assurant, ou tout au moins facilitant, le recentrage des végétaux vers l'axe C de ladite ouverture d'entrée 4 (et donc vers le plan médian M du rouleau 15), et aussi, comme on le verra plus loin, de moyens d'entraînement complémentaires 21 pour les végétaux.
Ces différents moyens d'entraînement et de recentrage sont détaillés dans la suite de la description.

Egalement, la trémie de chargement 5 est conformée pour optimiser le transfert des végétaux à broyer dans la chambre de broyage 3, tenant compte en particulier de la largeur D du rouleau 15, supérieure à la largeur L de l'ouverture d'entrée 4 de cette chambre de broyage 3.

Comme on peut le voir en particulier sur les figures 2 et 6, cette trémie de chargement 5 est formée d'une paroi frontale 22 prolongée vers l'amont par :
- une paroi de fond plane 23,
- deux parois de côté 24, et
- une paroi de dessus 25.

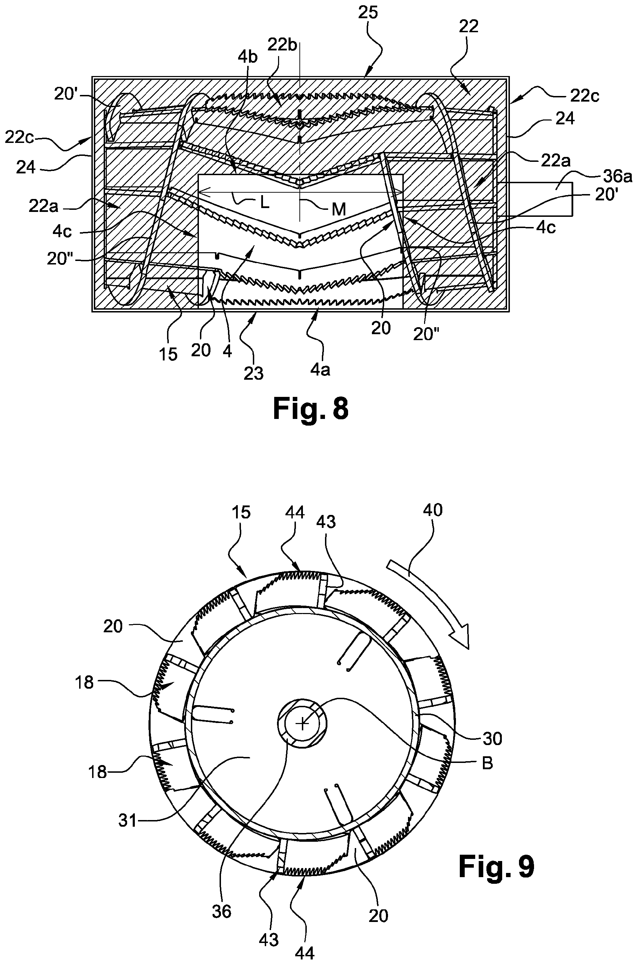

La largeur de la paroi frontale 22 est légèrement supérieure à la largeur D du rouleau 15. Cette paroi frontale 22 comporte l'ouverture 4 d'entrée dans la chambre de broyage 3.
Cette ouverture 4, de largeur L, présente une forme générale rectangulaire centrée sur la largeur de la paroi frontale 22.
Comme on peut le voir sur la figure 8, sur laquelle la paroi frontale 22 a été représentée hachurée, la bordure inférieure 4a de l'ouverture 4 s'étend dans le prolongement de la paroi de fond 23 de la trémie 5 ; sa bordure supérieure 4b s'étend sous le niveau de la paroi de dessus 25 et ses bordures de côté 4c s'étendent à distance des parois de côté 24.

Le fond de la chambre de broyage 3 peut s'étendre à partir d'un niveau un peu plus bas que la bordure inférieure 4a de l'ouverture d'entrée 4, de manière à former un léger décrochement facilitant le glissement des végétaux et leur introduction dans la chambre de broyage 3.

Les parties latérales 22a de la paroi frontale 22, situées de part et d'autre de l'ouverture d'entrée 4, s'étendent ici à l'équerre par rapport à l'axe C de cette dernière ; dans une variante de réalisation, elles peuvent être légèrement inclinées par rapport au plan perpendiculaire à l'axe C de ladite ouverture d'entrée 4, depuis les bordures de côté 4c précitées, et vers l'arrière, cela de quelques degrés, par exemple entre 2 et 10° (de préférence de l'ordre de 5°), pour faciliter le glissement des végétaux et leur introduction dans la chambre de broyage, limitant ainsi leurs possibilités d'accumulation sur les côtés de l'extrémité aval 14 de la trémie 5. D'autre part, la partie supérieure 22b de la paroi frontale 22, située entre lesdites parties latérales 22a et la paroi de dessus 25 de la trémie 5, est également inclinée vers l'arrière, pour faciliter le recentrage des végétaux et limiter leurs possibilités d'accumulation dans la partie supérieure de l'ouverture d'entrée 4.

Partant des extrémités latérales 22c de la paroi frontale 22, les parois de côté 24 de la trémie 5 comprennent, de l'aval vers l'amont (figure 6) :
- des portions aval 27 s'étendant parallèlement entre elles et à l'axe C de l'ouverture d'entrée 4, suivies, à partir de leur extrémité amont, par,
- des portions 28 qui s'évasent extérieurement vers l'arrière, elles-mêmes suivies, à partir de leur extrémité amont, par,
- des portions de côté 29 qui s'étendent parallèlement entre elles et à l'axe C de l'ouverture 4, jusqu'à l'extrémité amont 13 de la trémie 5.

Comme on peut le voir sur les figures 7 et 9 en particulier, le rouleau d'entraînement 15 est formé d'un tambour cylindrique 30 dont la surface périphérique 17 est équipée d'éléments rapportés 18, 20, 21 pour assurer les fonctions recherchées précitées d'entraînement et de recentrage, et dont les extrémités latérales sont fermées par des disques rapportés 31, et sont munies de moyens assurant son support par le châssis 2 du broyeur 1.

Le montage de ce rouleau d'entraînement 15 sur le châssis 2 est réalisé de sorte à préserver un espace entre sa périphérie et le fond plan 23 de la trémie 5, pour le passage des végétaux au travers de l'ouverture 4 d'entrée dans la chambre de broyage 3, et de manière à venir appliquer une pression par-dessus les végétaux en cours de transfert vers la chambre de broyage 3.

Les extrémités latérales du rouleau 15 traversent pour cela les portions aval 27 des parois de côtés 24 de la trémie 5 par l'intermédiaire d'ouvertures oblongues 32, et elles sont portées par une structure support 33 adaptée pour lui conférer une possibilité de déplacement vertical, en association avec des moyens de rappel élastique en direction dudit fond plan 23, de manière à assurer la pression recherchée sur les végétaux et aussi permettre l'absorption des variations d'épaisseur des végétaux à traiter.

La structure support 33 se présente ici sous la forme d'un balancier pivotant (figure 1), articulé autour d'un axe horizontal 34, associé à des moyens de rappel élastique, ici en forme de vérins/compas à gaz 35, ou en forme de ressorts. Cette structure support en forme de balancier 33 confère un mouvement en arc de cercle au rouleau 15.

Le rouleau 15 intègre un arbre 36, centré sur l'axe de rotation B, dont une extrémité 36a s'étend à l'extérieur pour coopérer avec une structure de palier portée par le balancier support 33, et dont l'autre extrémité, située intérieurement, dans l'encombrement du tambour 30, reçoit la sortie du moteur hydraulique 15' solidarisée par clavetage. Ce moteur hydraulique 15', porté par le balancier 33, assure l'entraînement en rotation du rouleau 15 à une vitesse réglable, par exemple comprise entre 0 et 120 tours/minute, en fonction de la taille désirée du broyat ; il est associé à un distributeur hydraulique à commande manuelle qui permet d'assurer sa rotation dans le sens de l'entrainement des végétaux dans la chambre de broyage (avance des végétaux) ou dans le sens inverse (recul des végétaux dans la trémie), ou qui permet de stopper sa rotation.

Les extrémités latérales du rouleau 15 s'étendent au plus près des faces internes des portions aval 27 des parois de côtés 24 de la trémie 5; et en position extrême basse, la périphérie du rouleau 15 s'étend à proximité du fond plan 23 et de la paroi frontale 22.
Sur la figure 4 on a représenté le rouleau 15 dans cette position extrême basse, avec un branchage G en attente de prise en charge. La figure 5 montre le même branchage G pris en charge et entraîné par le rouleau motorisé 15 (entre ce dernier et le fond 23 de la trémie) ; le rouleau 15 est alors déplacé vers le haut, porté par son balancier 33 et soumis aux moyens de rappel élastiques 35, appliquant une pression par-dessus le branchage G.

Le fond plan 23 de la trémie 5 est avantageusement équipé de barrettes saillantes longitudinales 38 (figure 6), ménagées parallèlement ou sensiblement parallèlement à l'axe C de l'ouverture d'entrée 4, pour chercher à maintenir les tiges de végétaux en alignement avec ladite ouverture d'entrée 4 lorsqu'elles progressent vers la chambre de broyage 3.

Le rouleau 15 est adapté de sorte à prendre en charge les végétaux introduits dans la trémie 5, et de sorte à les entraîner dans la chambre de broyage 3 par son ouverture d'entrée 4.

Pour cela, ce rouleau 15 est entraîné en rotation de sorte à tourner du haut vers le bas, vu depuis l'extrémité amont 13 de le trémie 5 (c'est-à-dire selon la flèche d'orientation 40, figures 4, 5, 7 et 9) ; en outre, comme expliqué auparavant, sa surface périphérique 17 est, d'une part, munie de moyens 18, 21 pour favoriser l'entraînement des végétaux lors de sa rotation, et, d'autre part (du fait de sa largeur D supérieure à la largeur L de l'orifice d'entrée 4 de la chambre de broyage 3), munie de moyens 20 aptes ou adaptés à recentrer les végétaux vers l'axe C de cette ouverture d'entrée 4, ces différents moyens étant détaillés ci-après, en relation avec les figures 6 à 9.

Comme on peut le voir sur ces figures 6 à 9, les moyens de recentrage 20 en question consistent ici en des spires hélicoïdales en saillie sur la périphérie de chaque extrémité 19 du rouleau 15 et dont les pas convergent vers son plan médian M, tenant compte de son sens de rotation 40.

Ces spires hélicoïdales 20 s'étendent au niveau de chaque extrémité du rouleau 15 sur un secteur angulaire au moins égal à 360° (c'est-à-dire sur au moins un tour de la surface du rouleau 15) et sur une largeur située en regard d'au moins une partie de la largeur des parties latérales 22a de la face frontale de trémie 22 (c'est-à-dire de part et d'autre de l'ouverture d'entrée 4).
De préférence, la largeur sur laquelle s'étendent les spires latérales 20 est voisine de la largeur des parties latérales 22a de la face frontale de trémie 22.

Comme on peut le voir sur la figure 8, les spires 20 s'étendent depuis les extrémités du rouleau 15, jusqu'un peu au-delà du niveau des bordures de côtés 4c de l'ouverture d'entrée 4, pour se situer très légèrement (sur quelques centimètres) dans l'encombrement de cette dernière. L'extrémité centrale des spires 20, située du côté du plan médian M du rouleau 15, déborde ainsi de quelques centimètres dans l'encombrement de l'ouverture d'entrée 4.

Ici, ces spires de recentrage 20 s'étendent au niveau de chaque extrémité du rouleau 15 sur une largeur comprise entre le tiers et le quart de sa largeur D.

Le pas des spires 20 peut être de l'ordre de quelques centimètres à quelques dizaines de centimètres. Leur hauteur, qui peut ne pas être égale sur toute leur longueur ; est avantageusement, en moyenne comprise entre 2 et 4 cm, de préférence voisine de 2,5 cm.

Plus précisément, dans le mode de réalisation illustré, la surface périphérique de chaque extrémité du rouleau 15 comporte deux spires 20' et 20", décalées entre elles de 180°. Chacune de ces spires 20', 20" s'étend sur un secteur angulaire de la périphérie du rouleau 15 compris entre 180° et 360°, avantageusement voisin de 270°.

Ici les spires 20', 20" ont un pas de l'ordre de 150 mm et la distance entre les deux spires 20' et 20" est de l'ordre de 75 mm.

On comprend que lors de la rotation du rouleau 15, les végétaux ou parties de végétaux positionnés sur les côtés de la trémie 5 (contre ou à proximité des parois de côtés 24) sont pris en charge par les spires hélicoïdales 20 et ramenés progressivement vers le centre, de manière à faciliter leur entrée dans la chambre de broyage 3.

D'autre part les spires de recentrage 20 ou les couples de spires de recentrage 20', 20" sont avantageusement décalées angulairement entre elles, de part et d'autre du plan médian M, de manière à obtenir un recentrage des végétaux en guingois (c'est-à-dire de manière alternée, non homogène), ceci pour provoquer des sortes d'à-coups latéraux successifs, destinés encore à faciliter l'entraînement des végétaux dans la chambre de broyage.

De telles spires hélicoïdales 20 sont réalisées par la juxtaposition de tronçons d'hélice dont la base est soudée sur le tambour 30 du rouleau 15 (voir figures 7 et 8).
Leur bordure extérieure est ici lisse, mais dans une variante de réalisation, elle pourrait aussi comporter une denture.

A titre de variante, ces spires hélicoïdales 20 peuvent être remplacées par des tronçons plans ou cintrés, indépendants ou juxtaposés, fixés sur chant contre le tambour 30, de manière inclinée par rapport à l'axe B.

Dans le mode de réalisation illustré, les extrémités latérales 19 de la surface périphérique 17 du rouleau 15 sont encore munies de palettes 21 qui servent à l'entraînement des végétaux et qui ont aussi pour fonction, le cas échéant, d'aider les végétaux à passer par-dessus les spires de recentrage 20, lorsqu'ils sont réorientés vers le plan médian M. Ces palettes 21 sont régulièrement ou sensiblement régulièrement espacées sur la périphérie des extrémités latérales du rouleau 15, et elles sont orientées parallèlement ou sensiblement parallèlement à son axe B.

Ces palettes 21 s'étendent en saillie depuis l'extrémité du rouleau 15 jusqu'à la spire de recentrage 20 en regard qui, située du même côté du rouleau 15, est la plus éloignée.
Elles sont espacées entre elles de quelques centimètres, par exemple de l'ordre de 5 à 8 cm. Leur hauteur est de l'ordre de 0,5 à 2 cm
Cette hauteur est avantageusement croissante depuis l'extrémité du rouleau 15 en allant vers son plan médian M (pour faciliter le passage des végétaux par-dessus les spires de recentrage 20); et elle est encore avantageusement inférieure à la hauteur des spires hélicoïdales 20.

Ces palettes 21 consistent en des plats longitudinaux dont la base est soudée sur le tambour 30 du rouleau 15 et dont la bordure externe est ici lisse, dépourvue de dents.
Dans une variante de réalisation, cette bordure externe des palettes 21 peut être dentée.

Comme on peut le voir sur la figure 7, ces palettes 21 peuvent être fixées sur le tambour 30 du rouleau 15 au niveau d'encoches 41 ménagées dans la base des spires 20, ainsi qu'éventuellement sur la périphérie des disques de fermeture 31.

D'autre part, comme précisé ci-dessus, des barrettes d'entraînement 18 sont ménagées sur la partie centrale 16 de la surface périphérique 17 du rouleau 15, disposées entre les moyens de recentrage 20 et les palettes d'entraînement 21 précitées.

Ces barrettes d'entraînement 18 s'étendent globalement en regard de toute la largeur de l'ouverture d'entrée 4 de la chambre de broyage 3.
Elles s'étendent entre les spires hélicoïdales 20 en regard et jusqu'à ces dernières, de manière à assurer une continuité des moyens d'entraînement avec les palettes latérales 21.
De préférence les barrettes 18 s'étendent dans le prolongement et entre deux palettes 21 en regard.

Ces barrettes d'entraînement 18 sont chacune en forme générale de Vé, constituées de deux pans ou plats 42 raccordés au niveau d'une pointe 43 qui est centrée sur le plan médian M du rouleau 15.

La pointe 43 des barrettes en Vé 18 est orientée vers l'aval par rapport au sens de rotation 40 du rouleau 15.

Les différentes barrettes 18 s'étendent parallèlement les unes aux autres et elles sont espacées d'une distance de quelques centimètres, par exemple 5 à 8 cm.
Leur hauteur est de l'ordre de celle des spires hélicoïdales 20, c'est-à-dire, ici, voisine de 2 cm.

La base des pans 42 de chaque barrette en Vé 18 est soudée sur le tambour 30 du rouleau 15.

Leur bordure externe est munie de dents 44 pour améliorer l'entraînement des végétaux. De préférence ces dents 44 sont inclinées vers le plan médian M du rouleau 15 pour participer à la fonction de recentrage des végétaux dans la trémie 5, en complément des moyens de recentrage latéraux 20.

Les barrettes 18 et palettes 21 d'entraînement permettent de tirer les végétaux sans excès dans le fond de la trémie 5.

La zone centrale 16 du rouleau 15 qui transfère les végétaux dans la chambre de broyage est nettement moins large que la largeur totale D du rouleau 15.
Cette zone centrale 16 est munie de barrettes à dents 18 dont l'inclinaison particulière forme des griffes agressives qui recentrent les végétaux dans l'axe de l'ouverture d'entrée 4 de la chambre de broyage 3.

Un tel rouleau 15, plus large que l'ouverture d'entrée 4 de la chambre de broyage 3 et associé à des moyens de recentrage 20, s'avère particulièrement efficace. Il facilite le transfert des végétaux vers l'intérieur de la chambre de broyage 3, notamment pour les larges fourches de bois qui disposent d'un espace important dans la partie aval de la trémie de chargement.

Bien que le broyeur selon l'invention soit particulièrement adapté au traitement de végétaux (branchages, troncs ...), il peut bien entendu être utilisé ou adapté pour le broyage d'autres produits à base de bois (palettes par exemple), de matière plastique, ou autres.

## Revendications

1. Broyeur de végétaux comprenant une chambre de broyage (3) équipée d'un rotor de broyage (8) entraîné en rotation autour d'un axe (A), laquelle chambre de broyage (3) comporte - une ouverture d'entrée (4) de largeur (L), qui est prolongée vers l'amont par une trémie (5) pour le chargement en végétaux à broyer, et - une ouverture de sortie (6) qui est prolongée vers l'aval par une goulotte (7) pour l'évacuation des végétaux broyés, laquelle trémie de chargement (5) comporte une extrémité amont (13) et une extrémité aval (14) qui est équipée d'un rouleau motorisé (15) entrainé en rotation autour d'un axe (B) parallèle ou sensiblement parallèle à l'axe de rotation (A) dudit rotor de broyage (8), lequel rouleau motorisé (15) est placé en regard de ladite ouverture d'entrée (4) de ladite chambre de broyage (3), avec son plan médian (M) centré ou sensiblement centré sur l'axe (C) de ladite ouverture d'entrée (4), et lequel rouleau motorisé (15) comporte une surface périphérique (17) adaptée pour entraîner les végétaux à broyer vers ladite ouverture d'entrée (4), **caractérisé en ce que** ledit rouleau motorisé d'entraînement (15) a une largeur (D) supérieure à la largeur (L) de ladite ouverture d'entrée (4) de la chambre de broyage (3), et comporte des extrémités latérales (19) dont la surface périphérique (17) est munie de moyens (20) assurant, ou tout au moins facilitant, le recentrage des végétaux vers ledit axe (C) de ladite ouverture d'entrée (4), lesquels moyens de recentrage consistent en au moins une spire hélicoïdale (20) en saillie sur la surface périphérique (17) de chaque extrémité (19) dudit rouleau (15), lesdites spires d'extrémités (20) ayant des pas convergeant vers ledit plan médian (M) dudit rouleau (15).

2. Broyeur de végétaux selon la revendication 1, **caractérisé en ce que** lesdits moyens de recentrage consistent, au niveau de chaque extrémité (19) du rouleau (15), en deux spires (20', 20") décalées entre elles de 180°.

3. Broyeur de végétaux selon l'une quelconque des revendications 1 ou 2, **caractérisé en ce que** lesdites spires de recentrage (20) sont décalées entre elles de part et d'autre du plan médian (M) du rouleau (15), pour obtenir un recentrage des végétaux en guingois.

4. Broyeur de végétaux selon l'une quelconque des revendications 1 à 3, **caractérisé en ce que** les moyens de recentrage (20) sont associés à des palettes d'entraînement (21) régulièrement ou sensiblement régulièrement espacées sur la surface périphérique (17) des extrémités latérales (19) du rouleau (15) et orientées parallèlement ou sensiblement parallèlement à l'axe (B) dudit rouleau (15).

5. Broyeur de végétaux selon l'une quelconque des revendications 1 à 4, **caractérisé en ce que** ledit rouleau motorisé d'entraînement (15) comporte des barrettes d'entraînement (18) aménagées dans la partie centrale (16) de sa surface périphérique (17), disposées entre lesdits moyens de recentrage (20).

6. Broyeur de végétaux selon la revendication 5, **caractérisé en ce que** lesdites barrettes d'entraînement (18) sont chacune en forme générale de Vé, constituée de deux pans (42) raccordés par une pointe (43) qui est centrée sur le plan médian (M) du rouleau (15), et qui est orientée vers l'aval par rapport au sens de rotation (40) dudit rouleau (15), et **en ce que** la bordure externe desdites barrettes d'entraînement (18) est munie de dents (44).

7. Broyeur de végétaux selon la revendication 6, **caractérisé en ce que** sur chaque pan (42) des barrettes en Vé (18), les dents (44) sont inclinées vers le plan médian (M) du rouleau (15).

8. Broyeur de végétaux selon la revendication 1 combinée avec l'une quelconque des revendications 5 à 7, **caractérisé en ce que** les extrémités des barrettes d'entraînement (18) s'étendent jusqu'à la spire hélicoïdale (20) en regard des moyens de recentrage latéraux.

9. Broyeur de végétaux selon l'une quelconque des revendications 1 à 8, **caractérisé en ce que** la trémie de chargement (5) comporte des parois de côtés (24) munies de portions aval (27) parallèles ou sensiblement parallèles entre elles, entre lesquelles est positionné ledit rouleau d'entraînement (15).

10. Broyeur de végétaux selon la revendication 9, **caractérisé en ce que** les extrémités aval des deux portions aval (27) des parois de côtés (24) de la trémie (5) se prolongent à l'équerre ou sensiblement à l'équerre par une paroi frontale (22) dans laquelle est ménagée ladite ouverture d'entrée (4) de la chambre de broyage (3).

11. Broyeur de végétaux selon l'une quelconque des revendications 8 ou 9, **caractérisé en ce que** les extrémités amont des deux portions aval (27) parallèles des parois de côtés (24) se prolongent par des portions latérales (28) qui s'évasent en direction de l'extrémité amont (13) de la trémie (5).

12. Broyeur de végétaux selon la revendication 11, **caractérisé en ce que** les extrémités amont des parois évasées (28) se prolongent par des portions de côté (29) parallèles qui s'étendent jusqu'à l'extrémité amont (13) de la trémie de chargement (5).

## Patentansprüche

1. Pflanzenhäcksler mit einer Häckselkammer (3), die mit einem um eine Achse (A) drehend angetriebenen Häckselrotor (8) ausgerüstet ist, wobei die Häckselkammer (3) - eine Eingangsöffnung (4) der Breite (L), die stromaufwärts durch einen Trichter (5) zum Befüllen mit zu häckselnden Pflanzen verlängert ist, und - eine Ausgangsöffnung (6), die stromabwärts durch eine Rinne (7) zum Abführen der gehäckselten Pflanzen verlängert ist, aufweist, wobei der Befüllungstrichter (5) ein stromaufwärts gerichtetes Ende (13) und ein stromabwärts gerichtetes Ende (14), das mit einer motorisierten Rolle (15) ausgestattet ist, die um eine zur Drehachse (A) des Häckselrotors (8) parallele oder im Wesentlichen parallele Achse (B) drehend angetrieben ist, aufweist, wobei die motorisierte Rolle (15) mit ihrer Mittelebene (M) auf die Achse (C) der Eingangsöffnung (4) zentriert oder im Wesentlichen zentriert gegenüber der Eingangsöffnung (4) der Häckselkammer (3) angeordnet ist, und wobei die motorisierte Rolle (15) eine Umfangsfläche (17) aufweist, die dazu ausgelegt ist, die zu häckselnden Pflanzen zur Eingangsöffnung (4) mitzunehmen, **dadurch gekennzeichnet, daß** die motorisierte Antriebsrolle (15) eine Breite (D), die größer als die Breite (L) der Eingangsöffnung (4) der Häckselkammer (3) ist, und seitliche Enden (19) aufweist, deren Umfangsfläche (17) mit Mitteln (20) versehen ist, die ein Zentrieren der Pflanzen zur Achse (C) der Eingangsöffnung (4) hin sicherstellen oder zumindest erleichtern, wobei die Zentriermittel aus wenigstens einer spiralförmigen, auf der Umfangsfläche (17) an jedem Ende (19) der Rolle (15) hervorstehenden Windung (20) bestehen, wobei die Endspiralen (20) auf die Mittelebene (M) der Rolle (15) zulaufende Spiralgänge aufweisen.

2. Pflanzenhäcksler gemäß Anspruch 1, **dadurch gekennzeichnet, daß** die Zentriermittel im Bereich jedes Endes (19) der Rolle (15) aus zwei gegeneinander um 180° versetzte Windungen (20', 20") bestehen.

3. Pflanzenhäcksler gemäß einem der Ansprüche 1 oder 2, **dadurch gekennzeichnet, daß** die Zentrierwindungen (20) beiderseits der Mittelebene (M) gegeneinander versetzt sind, um ein schräges Zentrieren der Pflanzen zu erhalten.

4. Pflanzenhäcksler gemäß einem der Ansprüche 1 bis 3, **dadurch gekennzeichnet, daß** die Zentriermittel (20) Antriebsschaufeln (21) zugeordnet sind, die auf der Umfangsfläche (17) der Seitenenden (19) der Rolle (15) regelmäßig oder wenigstens im Wesentlichen regelmäßig beabstandet und zur Achse (B) der Rolle (15) parallel oder im Wesentlichen parallel angeordnet sind.

5. Pflanzenhäcksler gemäß einem der Ansprüche 1 bis 4, **dadurch gekennzeichnet, daß** die motorisierte Antriebsrolle (15) im zentralen Teil (16) ihrer Umfangsfläche (17) eingerichtete und zwischen den Zentriermitteln (20) angeordnete Antriebsleisten (18) aufweist.

6. Pflanzenhäcksler gemäß Anspruch 5, **dadurch gekennzeichnet, daß** die Antriebsleisten (18) jeweils eine V-Form aufweisen, die aus zwei Flächen (42) besteht, die durch eine Spitze (43) verbunden sind, die auf die Mittelebene (M) der Rolle (15) zentriert ist und die in Bezug auf die Drehrichtung (40) der Rolle (15) stromabwärts gerichtet ist, und daß der äußere Rand der Antriebsleisten (18) mit Zähnen (44) versehen ist.

7. Pflanzenhäcksler gemäß Anspruch 6, **dadurch gekennzeichnet, daß** die Zähne (44) auf jeder Fläche (42) der V-förmigen Leisten (18) zur Mittelebene (M) der Rolle (15) hin gerichtet sind.

8. Pflanzenhäcksler gemäß Anspruch 1 in Verbindung mit einem der Ansprüche 5 bis 7, **dadurch gekennzeichnet, daß** sich die Enden der Antriebsleisten (18) bis zur spiralförmigen Windung (20) gegenüber den seitlichen Zentriermitteln erstrecken.

9. Pflanzenhäcksler gemäß einem der Ansprüche 1 bis 8, **dadurch gekennzeichnet, daß** der Befüllungstrichter (5) Seitenwände (24) aufweist, die mit stromabwärts angeordneten, zueinander parallelen oder im Wesentlichen parallelen Abschnitten (27) versehen sind, zwischen denen die Antriebsrolle (15) angeordnet ist.

10. Pflanzenhäcksler gemäß Anspruch 9, **dadurch gekennzeichnet, daß** die stromabwärts gelegenen Enden der beiden stromabwärts gelegenen Abschnitte (27) der Seitenwände (24) des Trichters (5) rechtwinklig oder im Wesentlichen rechtwinklig durch eine Vorderwand (22) verlängert sind, in der die Eingangsöffnung (4) der Häckselkammer (3) eingerichtet ist.

11. Pflanzenhäcksler gemäß einem der Ansprüche 8 oder 9, **dadurch gekennzeichnet, daß** die stromaufwärts gelegenen Enden der beiden parallelen stromabwärts gelegenen Abschnitte (27) der Seitenwände (24) durch seitliche Abschnitte (28) verlängert sind, die in Richtung des stromaufwärts gelegenen Endes (13) des Trichters (5) auseinander laufen.

12. Pflanzenhäcksler gemäß Anspruch 11, **dadurch gekennzeichnet, daß** die stromaufwärts gelegenen Enden der auseinander laufenden Wände (28) durch parallele Seitenabschnitte (29) verlängert sind, die sich bis zum stromaufwärts gelegenen Ende (13) des Befüllungstrichters (5) erstrecken.

## Claims

1. Plant shredder comprising a shredding chamber (3) equipped with a shredding rotor (8) rotated about an axis (A), wherein said shredding chamber (3) includes - an inlet opening (4) of width (L), which is extended upstream by a hopper (5) for the loading of plants to be shredded, and - an outlet opening (6) that is extended downstream by a chute (7) for the evacuation of the shredded plants, wherein said loading hopper (5) includes an upstream end (13) and a downstream end (14) that is equipped with a motor-driven roll (15) rotated about an axis (B) parallel or substantially parallel to the axis of rotation (A) of said shredding rotor (8), wherein said motor-driven roll (15) is placed opposite said inlet opening (4) of said shredding chamber (3), with its median plane (M) centred or substantially centred to the axis (C) of said inlet opening (4), and wherein said motor-driven roll (15) includes a peripheral surface (17) adapted to drive the plants to be shredded towards said inlet opening (4), **characterized in that** said motor-driven drive roll (15) has a width (D) higher than the width (L) of said inlet opening (4) of the shredding chamber (3), and includes lateral ends (19) whose peripheral surface (17) is provided with means (20) providing, or at least facilitating, the centering of the plants towards said axis (C) of said inlet opening (4), wherein said centering means consist in at least one helical spire (20) protruding from the peripheral surface (17) of each end (19) of said roll (15), said end spires (20) having pitches converging towards said median plane (M) of said roll (15).

2. Plant shredder according to claim 1, **characterized in that** said centering means consist, at each end (19) of the roll (15), in two spires (20', 20") offset relative to each other by 180°.

3. Plant shredder according to any one of claims 1 or 2, **characterized in that** said centering spires (20) are offset relative to each other on either side of the median plane (M) of the roll (15), to obtain a centering of the plants askew.

4. Plant shredder according to any one of claims 1 to 3, **characterized in that** the centering means (20) are associated with drive blades (21) regularly or substantially regularly spaced apart on the peripheral surface (17) of the lateral ends (19) of the roll (15) and oriented parallel or substantially parallel to the axis (B) of said roll (15).

5. Plant shredder according to any one of claims 1 to 4, **characterized in that** said motor-driven drive roll (15) includes drive bars (18) arranged in the central portion (16) of its peripheral surface (17), between said centering means (20).

6. Plant shredder according to claim 5, **characterized in that** said drive bars (18) are each generally V-shaped, consisted by two sections (42) connected by a tip (43) that is centred to the median plane (M) of the roll (15) and that is oriented downstream with respect to the direction of rotation (40) of said roll (15), and **in that** the outer edge of said drive bars (18) is provided with teeth (44).

7. Plant shredder according to claim 6, **characterized in that**, on each section (42) of the V-shaped bars (18), the teeth (44) are inclined towards the median plane (M) of the roll (15).

8. Plant shredder according to claim 1, combined with any one of claims 5 to 7, **characterized in that** the ends of the drive bars (18) extend up to the helical spire (20) opposite the lateral centering means.

9. Plant shredder according to any one of claims 1 to 8, **characterized in that** the loading hopper (5) includes side walls (24) provided with downstream portions (27) parallel or substantially parallel to each other, between which is positioned said drive roll (15).

10. Plant shredder according to claim 9, **characterized in that** the downstream ends of the two downstream portions (27) of the side walls (24) of the hopper (5) are extended perpendicularly or substantially perpendicularly by a front wall (22) into which is formed said inlet opening (4) of the shredding chamber (3).

11. Plant shredder according to any one of claims 8 or 9, **characterized in that** the upstream ends of the two parallel downstream portions (27) of the side walls (24) are extended by lateral portions (28) that flare out towards the upstream end (13) of the hopper (5).

12. Plant shredder according to claim 11, **characterized in that** the upstream ends of the flared-out walls (28) are extended by parallel side portions (29) that will extend up to the upstream end (13) of the loading hopper (5).
